# EUROPEAN PATENT SPECIFICATION

(11) **EP 4 386 691 B1**
(45) Date of publication and mention of the grant of the patent: **11.11.2026**
(21) Application number: 23214030.1
(22) Date of filing: 04.12.2023
(51) Int. Cl.: B60W 50/14, G06V 20/56, B60W 40/06, B60W 30/09, B60W 60/00, G06V 10/764

(54) **A VEHICLE, AND AN AUTONOMOUS DRIVING CONTROL METHOD AND SYSTEM FOR THE VEHICLE**
FAHRZEUG UND VERFAHREN UND SYSTEM ZUR STEUERUNG VON AUTONOMEM FAHREN FÜR DAS FAHRZEUG
VÉHICULE, ET PROCÉDÉ ET SYSTÈME DE COMMANDE DE CONDUITE AUTONOME POUR LE VÉHICULE

(30) Priority: 12.12.2022 CN 202211596671
(43) Date of publication of application: 19.06.2024
(73) Proprietor: Bayerische Motoren Werke Aktiengesellschaft, 80809 München (DE)
(72) Inventor: Yuan, Jenny, Shanghai, 200030 (CN); He, Qichen, Shanghai, 200081 (CN); Zhang, JianLin, Shanghai, 200081 (CN); Huang, Haiming, Shanghai, 200081 (CN); Zhang, Zed, Shanghai, 200081 (CN); Qi, Lin, Shanghai, 200081 (CN)

(56) References cited:
- JP-A- 2021 060 656
- US-A1- 2020 250 984
- US-A1- 2022 044 034

## Description

### FIELD OF THE INVENTION

The present disclosure relates generally to autonomous driving techniques, and more specifically to an autonomous driving control method and system for a vehicle.

### BACKGROUND OF THE INVENTION

Autonomous driving techniques have been researched for decades and are showing a trend towards practicality. With rapid development of control and information technology, autonomous driving techniques are gradually accepted by manufacturers and users. During process of driving, it is often found that there are potholes of different sizes gradually appeared on trimmed roads after a period of time is passed after construction of roads due to a variety of reasons, such as substandard construction, proliferation of large trucks, inadequate maintenance, untimely repairs, and the like. Currently, autonomous driving systems are not capable of detecting cracks or potholes as well as taking them as an impact factor into an autonomous driving strategy yet. However, during process of autonomous driving, road surface conditions and/or road gradient changes on the road ahead play an important role in safety of the autonomous driving. If there are cracks or potholes and the like on the road ahead, autonomous driving vehicles are prone to rollover or collision, and it is especially dangerous when the autonomous driving vehicles are driving at high speed on highway. Meanwhile, it will bring a poor ride experience to passengers in a situation when bumps caused by cracks, potholes, chaps, subsidence and/or fractures on the road are encountered. Among existing techniques, detection of potholes and cracks on a road is mainly used in road maintenance of municipal engineering, such as detection of whether there are potholes or cracks on road surfaces by using ultrasonic waves.

As for the field of autonomous driving, a method for detecting potholes or cracks on the road ahead quickly and accurately has not been realized yet. In order to improve safety of an autonomous driving vehicle, there is an urgent need for a method of detecting road conditions in real time and simultaneously notifying the autonomous driving vehicle to evade or decelerate in advance. Document US 2020/250984 A1 (KUNDU SUBRATA KUMAR [US] ET AL) 6 August 2020, constitutes relevant prior art.

### SUMMARY OF THE INVENTION

In view of the above technical problems, the present invention provides an autonomous driving control method and system for a vehicle and the vehicle thereof according to claim 1 and claim 6 respectively.

In the first aspect, the present disclosure provides an autonomous driving control method for a vehicle. The autonomous driving control method may comprise: obtaining a road surface image from a sensor of the vehicle; detecting road surface damage from the road surface image using an image detection algorithm; determining a damage degree of the detected road surface damage and a damage distance of the road surface damage from the vehicle; and adjusting an autonomous driving strategy for the vehicle based on the damage degree and the damage distance.

In accordance with an embodiment of the present disclosure, detecting the road surface damage from the road surface image using the image detection algorithm may further comprise: in response to detecting the road surface damage in the road surface image, identifying the detected road surface damage with a bounding box in the road surface image.

In accordance with an embodiment of the present disclosure, determining the damage distance of the road surface damage from the vehicle further comprises: converting, using a conversion algorithm, pixel positions of the boundary box of the road surface damage under a coordinate system of the sensor to pixel positions under an ego vehicle coordinate system; and determining the damage distance of the road surface damage from the vehicle based on the pixel positions of the bounding box of the road surface damage under the ego vehicle coordinate system.

In accordance with an embodiment of the present disclosure, determining the damage degree of the detected road surface damage further comprises: classifying the detected road surface damage and determining a category confidence level; and determining the damage degree based on the determined category and the category confidence level.

In accordance with an embodiment of the present disclosure, optionally, the category of the road surface damage comprises: a lateral crack, a longitudinal crack, a pothole, a chap, a subsidence and a fracture.

In accordance with an embodiment of the present disclosure, optionally, in the case that the category of the road surface damage is a lateral crack or a longitudinal crack and the category confidence level is greater than a first threshold, the road surface degree of the road surface damage is level 0; in the case that the category of the road surface damage is a pothole and the category confidence level is greater than a second threshold, the road surface degree of the road surface damage is level 1; or in the case that the category of the road surface damage is a chap, a subsidence or a fracture and the category confidence level is greater than a third threshold, the road surface degree of the road surface damage is level 2.

In accordance with an embodiment of the present disclosure, optionally, the first threshold is 60 to 90%, the second threshold is 60 to 90%, and the third threshold is 60 to 90%.

In accordance with an embodiment of the present disclosure, optionally, adjusting the autonomous driving control method of claim 1, wherein adjusting the autonomous driving strategy further comprises at least one of avoidance, deceleration, and stop.

In the second aspect, the present disclosure provides an autonomous driving control system for a vehicle. The autonomous driving control system may comprise: a sensor configured to capture a road surface image; a road surface damage detection unit configured to: detect road surface damage from the road surface image captured by the sensor using an image detection algorithm; determine a damage degree of the detected road surface damage and a damage distance of the road surface damage from the vehicle; and an autonomous driving unit configured to adjust an autonomous driving strategy for the vehicle based on the damage degree and the damage distance.

In accordance with an embodiment of the present disclosure, optionally, the sensor is further configured to correct the captured the road surface image in virtual to compensate for bumps or road gradient changes.

In accordance with an embodiment of the present disclosure, the road surface damage detection unit is further configured to detect the road surface damage from the road surface image using the image detection algorithm by: in response to detecting the road surface damage in the road surface image, identifying the detected road surface damage with a bounding box in the road surface image.

In accordance with an embodiment of the present disclosure, determining the damage distance of the road surface damage from the vehicle further comprises: converting, using a conversion algorithm, pixel positions of the boundary box of the road surface damage under a coordinate system of the sensor to pixel positions under an ego vehicle coordinate system; and determining the damage distance of the road surface damage from the vehicle based on the pixel positions of the bounding box of the road surface damage under the ego vehicle coordinate system.

In accordance with an embodiment of the present disclosure, determining the damage degree of the detected road surface damage further comprises: classifying the detected road surface damage and determining a category confidence level; and determining the damage degree based on the determined category and the category confidence level.

In the third aspect, the present disclosure provides a vehicle. The vehicle may comprise an autonomous driving control system for the vehicle discussed above.

In accordance with an embodiment of the present disclosure, optionally, the autonomous driving unit is further configured to adjust the autonomous driving strategy for the vehicle based on a type, user setting and/or a current speed of the vehicle.

In accordance with an embodiment of the present disclosure, optionally, the autonomous driving is further configured to send an alert for the road surface damage to a user of the vehicle in response to detecting the road surface damage.

The autonomous driving control method for the vehicle of the present disclosure can detect potholes or cracks on the road ahead accurately in real time and adjust the autonomous driving strategy based on a detection result, so as to ensure safety of passengers in the vehicle and simultaneously to improve experience of passengers during the process of autonomous driving.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present disclosure in details, reference can be made to various embodiments, so as to describe the summary of the invention above more specifically, some aspects of which are depicted in the accompanying drawings. However, it should be noted that the accompanying drawings only show some typical aspects of the present disclosure, and thus should not be considered as limiting the scope of the present disclosure, because this description may allow other equivalent aspects.
FIG 1 shows a diagram of an example of road surface damage.
FIG 2 shows a flow chart of an autonomous driving control method for a vehicle in accordance with an embodiment of the present disclosure.
FIG 3 shows a diagram of road surface damage detected from a road surface image in accordance with an embodiment of the present disclosure.
FIG 4 shows a diagram of an autonomous driving control system for a vehicle in accordance with an embodiment of the present disclosure.
FIG 5 shows a diagram of a vehicle equipped with an autonomous driving control system in accordance with an embodiment of the present disclosure.
FIG 6 shows a block diagram of an device for an autonomous driving control system for a vehicle in accordance with an embodiment of the present disclosure.

### DETAILED DESCRIPTION

In the following detailed description, numerous specific details are set forth to provide thorough understanding of the described embodiments. It will be apparent, however, to those skilled in the art that the described embodiments can be practiced without some or all of these specific details. In other embodiments, well-known structures or process steps are not described in detail in order to avoid unnecessarily obscuring concept of the present disclosure.

In description of embodiments of the present disclosure, it should be noted that, unless otherwise specified, the term "more" means more than two; the term "and/or" is merely a description of association relationship of the associated objects, which represents three types of relationships, such as A and/or B, which may represent existence of A alone, existence of both A and B, and existence of B alone; the character '/' in the present application generally represents that the associated objects is in an 'or' relationship. In addition, the term "first", "second", "third", and the like, is only used for descriptive purposes, and should not be understood as indicating or implying relative importance.

Unless otherwise defined, all technical and scientific terms used herein have the same meaning as commonly understood by those skilled in the art to which this disclosure belongs; the terms used herein are only for purpose of describing specific embodiments, and are not intended to limit the scope of the present disclosure; the terms "comprise" and "have" and their variations, as used in the Description and Claims of the present disclosure and the accompanying drawings above, are intended to cover non-exclusively containing.

The term "embodiment" mentioned herein means that, specific features, structures, or characteristics described in conjunction with embodiments may be included in at least one of the embodiments of the present disclosure. The phrases appeared at different locations in the Description do not necessarily refer to the same embodiment, and also do not refer to independent or alternative embodiments that are mutually exclusive with other embodiments. Those skilled in the art will explicitly and implicitly understand that the embodiments described herein can be combined with other embodiments.

In the following description, many specific details (such as examples of specific components, circuits, and processes) are set forth to provide thorough understanding of the present disclosure. As used herein, the term "couple", "joint", "interconnect" or "connect" means connecting directly, or connecting via one or more intermediate media or components. For those skilled in the art, the specific meaning of the above terms in the present disclosure may be understood depending on specific situation. Moreover, in the following description and for purpose of explanation, specific nomenclature is set forth to provide thorough understanding of the various embodiments of the present disclosure. However, it will be apparent to those skilled in the art that the various illustrative embodiments may be practiced without these specific details. In other instances, well-known circuits and devices are depicted in block diagrams to avoid obscuring the present disclosure.

For simplicity, the present disclosure is described in conjunction with "vehicle", but the "vehicle" in the embodiments described herein is not limited to vehicles, but can be applicable to any other type of transportations.

During process of autonomous driving, road surface conditions and/or road gradient changes on the road ahead play an important role in safety of the autonomous driving. If there are cracks or potholes and the like on the road ahead, autonomous driving vehicles are prone to rollover or collision, and it is especially dangerous when the autonomous driving vehicles are driving at high speed on highway. Meanwhile, it will bring a poor ride experience to passengers in a situation when bumps caused by cracks, potholes, chaps, subsidence and/or fractures on the road are encountered.

To solve one or more of the technical problems above, the present disclosure proposes an autonomous driving control system for a vehicle. The autonomous driving control system can detect road conditions in real time, and notify the autonomous driving vehicle to respond in time, so as to improve safety of autonomous driving, and simultaneously to improve experience of passengers in the vehicle.

The autonomous driving control system for the vehicle will be illustrated in detail below in conjunction with the accompanying drawings some embodiments will be listed to illustrate some application scenarios.

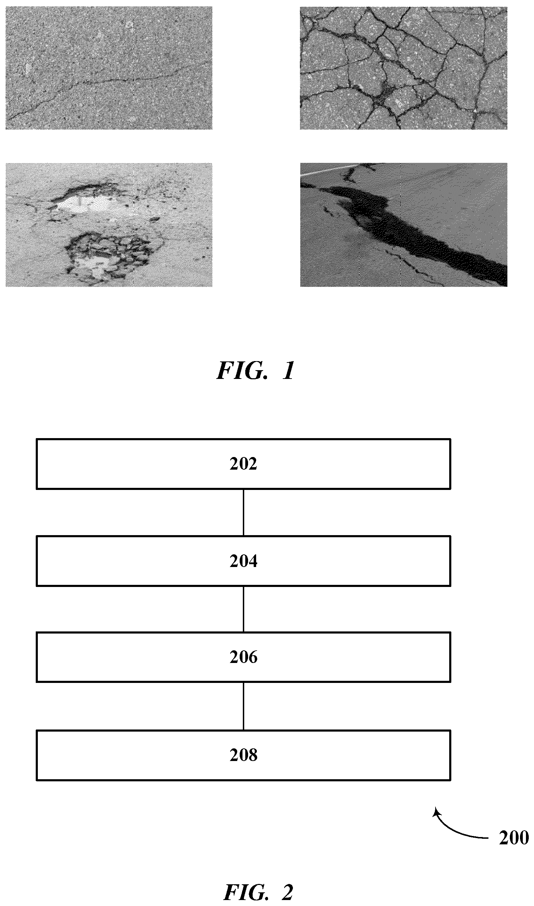

FIG 1 illustrates a diagram of an example of road surface damage. FIG 1 (top left) shows a micro crack, FIG 1 (top right) shows a chap, FIG 1 (bottom left) shows a pothole, and FIG 1 (bottom right) shows a fracture. For illustrative purposes, some examples of road surface damage are listed above, those skilled in the art would understand that the road surface damage referred in the present disclosure includes but is not limited to the examples above, and other road surface damage conditions also fall within the scope of protection of the present disclosure.

FIG 2 shows a flow chart of an autonomous driving control method 200 for a vehicle for a vehicle in accordance with an embodiment of the present disclosure. In accordance with an embodiment of the present disclosure, the autonomous driving control method 200 may comprise the following steps.

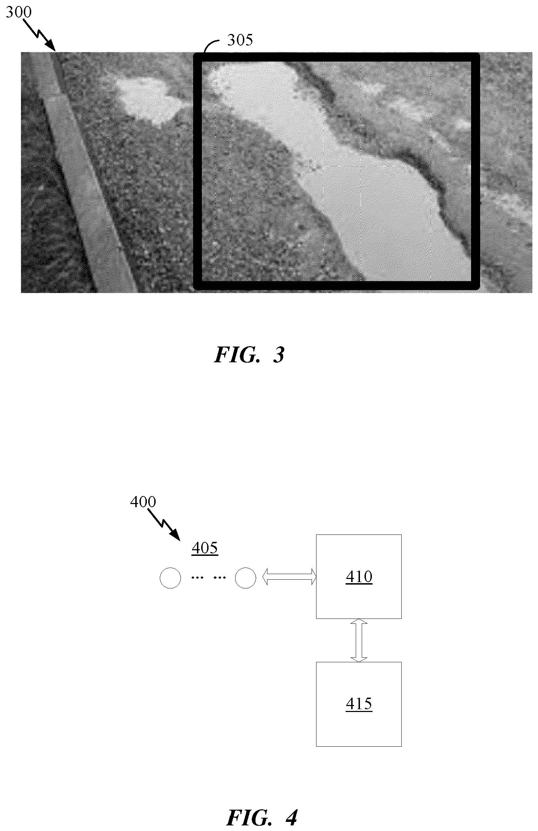

At 202, a road surface image may be obtained from a sensor of a vehicle. For example, a road surface image, such as the road surface image 300 shown in FIG 3, may be obtained from a sensor of a vehicle. FIG. 3 shows a pothole exists in the road surface image 300.

At 204, an image detection algorithm may be used to detect road surface damage from the road surface image. As an example, the category of the road surface damage may include but is not limit to: a lateral crack, a longitudinal crack, a pothole, a chap, a subsidence and a fracture. In an embodiment, using the image detection algorithm to detect the road surface damage from the road surface image comprises: identifying the detected road surface damage (such as a pothole) with a bounding box 305 in response to detecting the road surface damage in the road surface image. Although a rectangular bounding box is illustrated as an example in the embodiment of the present disclosure, those skilled in the art would understand that bounding boxes of other shapes (such as a square, circular, oval bounding box) may also be applicable to the present disclosure. In addition, the image detection algorithm may comprise one or more types of bounding boxes. As an example, when a road surface damage is detected, different bounding boxes may be selected for adaption according to the road surface damage. As another example, a circular or oval bounding box is used when the detected road surface damage is a pothole, and a rectangular bounding box is used if the detected road surface damage is a crack. In an embodiment, the image detection algorithm may comprise at least one of: a series of Region-CNN algorithms, a series of Yolo algorithms and a series of CenterNet algorithms.

At 206, damage degree of the detected road surface damage and damage distance of the road surface damage from the vehicle may be determined. In an embodiment, determining the damage degree of the detected road surface damage comprises: classifying the detected road surface damage and determining a category confidence level; and determining the damage degree based on the determined category and the category confidence level. For example, in the case that the category of the road surface damage is a lateral crack or a longitudinal crack and the category confidence level is smaller than a threshold (for example, when the crack on the road surface is relatively small), it can be considered no road surface damage. As an example, in the case that the category of the road surface damage is a lateral crack or a longitudinal crack and the category confidence level is greater than a first threshold, the road surface degree of the road surface damage is level 0. As another example, in the case that the category of the road surface damage is a pothole and the category confidence level is greater than a second threshold, the road surface degree of the road surface damage is level 1. As yet another example, in the case that the category of the road surface damage is a chap, a subsidence or a fracture and the category confidence level is greater than a third threshold, the road surface degree of the road surface damage is level 2. In an embodiment, determining the damage distance of the road surface damage from the vehicle comprises: converting, using a conversion algorithm (such as a attention mechanism-based conversion algorithm), pixel positions of the boundary box of the road surface damage under a coordinate system of the sensor to pixel positions under a ego vehicle coordinate system; and determining the damage distance of the road surface damage from the vehicle based on the pixel position of the bounding box of the road surface damage under the ego vehicle coordinate system. In some cases, the thresholds are between 60 and 90%, thus the first threshold is between 60 and 90%, the second threshold is between 60 and 90%, and the third threshold is between 60 and 90%. Preferably, these thresholds may be the same or different. In some cases, the damage distance of the road surface damage from the vehicle may refer to distance of the vehicle from the closest boundary of the bounding box of the road surface damage (for example, in the area detected) to the vehicle.

At 208, the autonomous driving strategy is adjusted based on the damage degree and the damage distance. In an embodiment, adjusting the autonomous driving strategy may further comprise at least one of avoidance, deceleration, and stop. As an example, in the case that the damage degree of the road surface damage is level 0, adjusting the autonomous driving strategy may comprise avoidance (for example, changing lanes) or decelerating (for example, reducing speed by 10 to 20%). In the case that the damage degree of the road surface damage is level 1, adjusting the autonomous driving strategy may comprise avoidance (for example, changing lanes) or deceleration (for example, reducing speed by 20 to 30%). In the case that the damage degree of the road surface damage is level 2, adjusting the autonomous driving strategy may comprise avoidance (such as changing lanes) or deceleration (for example, reducing speed by 30 to 50%), or even stopping. The adjustment of the autonomous driving strategy may also be based on a road surface environment (for example, a number of lanes on the road, surrounding vehicles, obstacles, pedestrians), a travelling state (for example, a current travelling speed) of the vehicle, a type of the vehicle (for example, bus, van), and a setting mode (for example, fast driving mode, comfort mode and the like) of the vehicle. It should be noted that adjustment of the autonomous driving strategy always takes safety as the primary adjustment principle.

FIG 4 shows a structural diagram of an autonomous driving control system 400 for a vehicle in accordance with an embodiment of the present disclosure. The autonomous driving control system 400 may be configured to perform an autonomous driving control method for the vehicle. The autonomous control method will be specifically illustrated below in conjunction with FIG 4.

As shown in FIG 4, the autonomous driving control system 400 may include one or more sensors 405, a road surface damage detection unit 410 and an autonomous driving unit 415. The sensor 405 may be configured to capture a road surface image. The road surface damage detection unit 410 may be configured to detect road surface damage from the road surface image captured by the sensor using the image detection algorithm and restrict a damage area based on the road surface image, and determine damage degree of the detected road surface damage and damage distance of the road surface damage from the vehicle. The autonomous driving unit 415 may be configured to adjust the autonomous driving strategy of the vehicle based on the damage degree and the damage distance. It should be noted that FIG. 4 is provided merely as an example, and is not intended to be limiting.

In an embodiment, the sensor(s) 405 may be coupled to the road surface damage detection unit 410 for communication. In an example, the sensor(s) 405 may be coupled to the road surface damage detection unit 410 for real-time communication. In an example, the sensor(s) 405 may be in periodic communication with the road surface damage detection unit 410, wherein the periodicity of the sensor(s) may be associated with travelling speed of the vehicle. As an example, the sensor(s) 405 may be coupled to the road surface damage detection unit 410 for communication via an on-vehicle bus. As another example, the sensor(s) 405 may be wirelessly coupled to the road surface damage detection unit 410 for wireless communication via various wireless communication modes (such as but not limit to, infrared, Bluetooth, 3G, 4G, 5G, and other wireless communication modes in the future). As yet another example, the sensor(s) 405 may communicate with the road surface damage detection unit 410 via an on-vehicle bus in a wireless communication mode respectively. For example, sensor(s) 405 coupled to the road surface damage detection unit 410 via an on-vehicle bus may be preinstalled at the factory, and one or more other sensors 405 supporting wireless communication with the road surface damage detection unit 410 may be installed when they are actually used by users. The road surface damage detection unit 410 supporting wireless communication may be preset with a wireless communication mode (not shown in FIG 4).

In an embodiment, the road surface damage detection unit 410 may be coupled to the autonomous driving unit 415 for communication. In some cases, the road surface damage detection unit 410 may report the detection result to the autonomous driving unit 415 for the autonomous driving unit 415 to adjust an autonomous driving strategy for the vehicle. In some cases, the autonomous driving unit 415 may set a detection standard for the road surface damage detection unit 410. For example, the autonomous driving unit may set the road surface damage detection unit 410 according to a driving mode set by a user, for example, setting a confidence threshold used by the road surface damage detection unit 410 when detecting the road surface damage, and the like.

In an embodiment, the sensor(s) 405 may be further configured to correct the captured road surface image in virtual to compensate for bumps or road gradient changes. Bumps or road gradient changes may distort the captured image, which may bias the restriction of the damage area and thus the damage degree and the damage distance. Correcting the captured the road surface image in virtual enables the restriction of the damage area more accurately, and thus the determination of the damage degree and the damage distance more accurately, which enables the autonomous driving unit to adjust the autonomous driving strategy more accurately, so as to respond to the road surface damage by avoiding or decelerating. The sensor(s) herein may refer to apparatuses for converting optical image signals into electrical signals for storage or transmission, such as but are not limited to, cameras, video cameras, photographic cameras and imaging apparatuses. As an example, the sensor(s) may be but is not limited to: infrared sensors, LIDAR, millimeter-wave radar, sonic sensors, fisheye cameras, laser scanners, and the like.

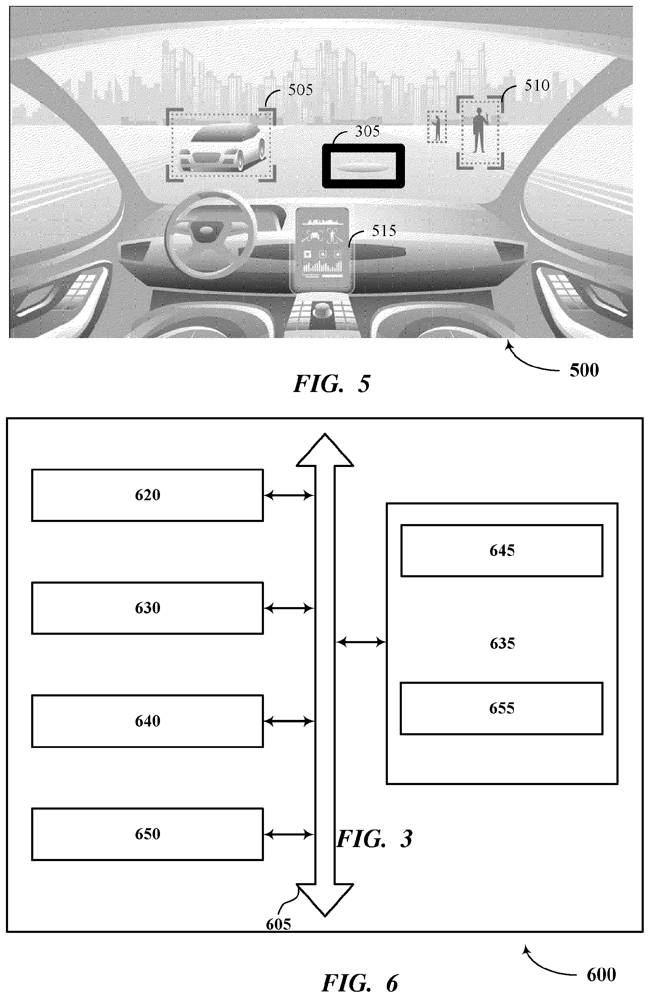

FIG 5 shows a diagram of a vehicle 500 equipped with an autonomous driving control system 400 in accordance with an embodiment of the present disclosure. As shown in FIG 5, the autonomous driving control system 400 may be integrated into the vehicle 500. The sensor(s) 405 of the autonomous driving control system 400 may be distributed at any location of the vehicle 500 in any form. As an example, the sensor(s) 405 may be installed on the whole body of the vehicle. As another example, the sensor(s) 405 may be installed on the face of the vehicle to detect the road surface conditions on the road ahead. In some cases, installation of sensor(s) on a windshield or windows of the vehicle may affect view of the driver and passengers, or affect appearance of the vehicle. Thus, the installation of sensor(s) on the windshield or the windows of the vehicle is avoided. Optionally, sensor(s) may be installed on a framework of the vehicle.

In an embodiment, the autonomous driving unit 405 of the autonomous driving control system 400 may be further configured to adjust the autonomous driving strategy based on a type, a user setting and/or a current travelling speed of the vehicle. For example, adjusting the autonomous driving strategy for the vehicle may further comprise at least one of avoidance (for example, changing lanes), deceleration, stopping. As described above, in the case that the damage degree of the road surface damage is level 0, adjusting the autonomous driving strategy may comprise avoidance (for example, changing lanes) or deceleration (for example, reducing speed by 10 to 20%). In the case that the damage degree of the road surface damage is level 1, adjusting the autonomous driving strategy may comprise avoidance (for example, changing lanes) or deceleration (for example, reducing speed by 20 to 30%). In the case that the damage degree of the road surface damage is level 2, adjusting the autonomous driving strategy may comprise avoidance (for example, changing lanes) or deceleration (for example, reducing speed by 30 to 50%), or even just stop.

In an additional embodiment, the adjustment of the autonomous driving strategy may also be based on a road surface environment (for example, a number of lanes on the road (not shown), surrounding vehicles 505, obstacles (not shown), pedestrians 510), a travelling state (for example, a current travelling speed) of the vehicle, a type of the vehicle (for example, bus, van), and a setting mode (for example, fast driving mode, comfort mode and the like) of the vehicle. It should be noted that adjustment of the autonomous driving strategy always takes safety as the primary adjustment principle.

In an embodiment, the autonomous driving unit 405 of the autonomous driving control system 400 may be further configured to issue an alert for the road surface damage to a user of the vehicle in response to detecting the road surface damage. For example, the autonomous driving control system may issue an alert for the road surface damage to a user of the vehicle via various modes, such as via an auditory mode, a visual mode, a tactile mode, and the like. As an example, the autonomous driving control system 400 may prompt the road surface damage to the user on a display 515. As another example, the autonomous driving control system 400 may broadcast the road surface damage to the user via voice.

The autonomous driving control system for the vehicle in the present disclosure can take the road surface damage into account when functional safety of autonomous driving is designed. For example, the autonomous driving control system in the present disclosure can detect the road surface damage on the road ahead in real time, classify the road surface damage, determine a category of the road surface damage and a location of the road surface damage (for example, determine the damage distance of the road surface damage from the vehicle through coordinate system conversion), and thus adjust the autonomous driving strategy based on the category of the road surface damage and the location of the road surface damage in real time, so as to evade or decelerate in advance, which improves safe performance of the autonomous driving vehicle. The autonomous driving control system for the vehicle in the present disclosure possesses the following advantages:
1. virtually correcting the sensor so as to ensure that the captured images are not affected by bumps or road gradient changes;
2. detecting road surface damage ahead using an image detection algorithm, and providing damage degrees and damage bounding boxes;
3. determining the damage distance of the road surface damage from the vehicle by coordinate system conversion;
4. adjusting autonomous driving strategies according to current travelling speed, damage degrees of the road surface damage, the damage distance of the road surface damage, road environment, and the like, to decelerate or make avoidance under the premise of safety.

FIG 6 shows a block diagram of a device 600 comprising an autonomous driving control system for a vehicle in accordance with an embodiment of the present disclosure. The device shows a general hardware environment, wherein the present disclosure may be applicable to exemplary embodiments in accordance with the present disclosure.

With reference to FIG 6, a device 600, which is an exemplary embodiment of the hardware device that may be applicable to aspects of the present disclosure, will now be described. The device 600 may be any machine configured to perform processing and/or calculations, may be but is not limited to a work station, a server, a desktop computer, a laptop computer, a tablet computer, a personal data assistant (PDA), a smart phone, an on-vehicle computer or any combination thereof. The above system may be wholly or at least partially implemented by the device 600 or a similar device or system.

The device 600 may comprise elements that are connected with or in communication with a bus 602, possibly via one or more interfaces. For example, the device 600 may comprise a bus 602, and one or more processors 620, one or more input devices 640 and one or more output devices 650. The one or more processors 620 may be any type of processors, and may comprise but are not limited to one or more general-purpose processors and/or one or more special-purpose processors (such as special processing chips). The input devices 640 may be any type of devices which can input information to the device 600, and may comprise but are not limited to a mouse, a keyboard, a touch screen, a microphone and/or a remote control. The output devices 650 may be any type of devices which can present information, and may comprise but are not limited to a display, a speaker, a video/audio output terminal, a vibrator and/or a printer. The device 600 may also include a memory device 630 or connect with a memory device 630. The memory device 630 may be any memory device which stores data, and may comprise but is not limited to a disk drive, an optical memory device, a solid-state memory, a floppy disk, a hard drive, a magnetic tape or any other magnetic media, disc or any other optical media, a ROM (read-only memory), a RAM(random-access memory), a cache memory, and/or any other memory chip or cartridge, and/or any other medium from which a computer may read data, instructions and/or codes. The memory device 630 may have data/instructions/codes for performing the above methods and steps.

In addition, the output device 650 may include a display for presenting surroundings of the vehicle. The output device 650 may also include a speaker or an interface for headphones, for audio prompts.

The bus 602 may comprise but is not limited to Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Particularly, for an on-vehicle device, the bus 602 may also include a Controller Area Network (CAN) bus or other architectures designed for application on automobiles.

The device 600 may also include a memory 635, which may be any type of working memory which may store instructions and/or data useful for operations of processing unit 620, and may comprise but is not limited to a random access memory and/or a read-only memory device.

A software element may be located in the memory 635, comprises but is not limited to, an operating system 655, one or more applications 645, a driver, and/or other data and codes. Instructions for performing the above methods and steps may be included in one or more applications 645, and units of the above device 600 may be realized through reading and executing instructions from one or more applications by the processing unit 620. The executable code or source code for the instructions of the software element may be stored in a non-transitory computer-readable storage medium, such as the above memory device 630, and may be loaded into the memory 635 upon compilation and/or installation. The executable code or source code for the instructions of the software element may also be downloaded remotely.

The "scope" of the present disclosure is defined by the lower and upper limits, and the given range is limited by selecting a lower limit and an upper limit, which define the boundaries of the specific range. The range as defined in this way may be inclusive or exclusive of the end values, and may be combined in any way, that is, any lower limit can be combined with any upper limit to form a range. In the present disclosure, unless otherwise specified, the numerical range "a to b" represents an abbreviation of any real number combination between a and b, where a and b are both real numbers.

In the present disclosure, unless otherwise specified, all embodiments and preferred embodiments mentioned herein may be combined to form new technical solutions.

In the present disclosure, unless otherwise specified, all technical features and preferred technical features mentioned herein may be combined to form new technical solutions. Although the present disclosure has been described with reference to optional embodiments, various improvements can be made and components can be replaced with equivalents without departing from the scope of the present disclosure. Especially, as long as there is no structural conflict, all technical features mentioned in various embodiments can be combined in any way. The present disclosure is not limited to the specific embodiments disclosed herein, but includes all technical solutions within the scope of the claims.

## Claims

1. An autonomous driving control method for a vehicle, comprising:
obtaining a road surface image from a sensor of the vehicle;
detecting road surface damage from the road surface image using an image detection algorithm;
in response to detecting the road surface damage in the road surface image, identifying the detected road surface damage with a bounding box in the road surface image;
converting, using a conversion algorithm, pixel positions of the boundary box of the detected road surface damage under a coordinate system of the sensor to pixel positions under an ego vehicle coordinate system;
determining a damage degree of the detected road surface damage, wherein determining the damage degree of the detected road surface damage further comprises: classifying the detected road surface damage and determining a category confidence level, and determining the damage degree based on the determined category and the category confidence level;
determining a damage distance of the road surface damage from the vehicle based on the pixel positions of the bounding box of the road surface damage under the ego vehicle coordinate system; and
adjusting an autonomous driving strategy for the vehicle based on the damage degree and the damage distance.

2. The autonomous driving control method of claim 1, wherein the category of the road surface damage comprises: a lateral crack, a longitudinal crack, a pothole, a chap, a subsidence and a fracture.

3. The autonomous driving control method of claim 2 wherein:
in the case that the category of the road surface damage is a lateral crack or a longitudinal crack and the category confidence level is greater than a first threshold, the road surface degree of the road surface damage is level 0;
in the case that the category of the road surface damage is a pothole and the category confidence level is greater than a second threshold, the road surface degree of the road surface damage is level 1; or
in the case that the category of the road surface damage is a chap, a subsidence or a fracture and the category confidence level is greater than a third threshold value, the road surface degree of the road surface damage is level 2.

4. The autonomous driving control method of claim 1, wherein the first threshold is 60 to 90%, the second threshold is 60 to 90%, and the third threshold is 60 to 90%.

5. The autonomous driving control method of claim 1, wherein adjusting the autonomous driving strategy further comprises at least one of avoidance, deceleration, and stop.

6. An autonomous driving control system for a vehicle, comprising:
a sensor configured to capture a road surface image;
a road surface damage detection unit configured to:
detect road surface damage from the road surface image captured by the sensor using an image detection algorithm;
in response to detecting the road surface damage in the road surface image, identify the detected road surface damage with a bounding box in the road surface image;
convert, using a conversion algorithm, pixel positions of the boundary box of the detected road surface damage under a coordinate system of the sensor to pixel positions under an ego vehicle coordinate system;
determine a damage degree of the detected road surface damage by classifying the detected road surface damage and determining a category confidence level, and determining the damage degree based on the determined category and the category confidence level; and
determine a damage distance of the road surface damage from the vehicle based on the pixel positions of the bounding box of the road surface damage under the ego vehicle coordinate system; and
an autonomous driving unit configured to adjust an autonomous driving strategy for the vehicle based on the damage degree and the damage distance.

7. The autonomous driving control system of claim 6, wherein the sensor is further configured to correct the captured the road surface image in virtual to compensate for bumps or road gradient changes.

8. A vehicle comprising an autonomous driving control system of any one of claims 6-7.

9. The vehicle of claim 8, wherein the autonomous driving unit is further configured to adjust the autonomous driving strategy for the vehicle based on a type, user setting and/or a current speed of the vehicle.

10. The vehicle of claim 8, wherein the autonomous driving is further configured to issue an alert for the road surface damage to a user of the vehicle in response to detecting the road surface damage.

## Patentansprüche

1. Verfahren zur Steuerung des autonomen Fahrens eines Fahrzeugs, das Folgendes umfasst:
Erhalten eines Fahrbahnoberflächenbildes mittels eines Sensors des Fahrzeugs;
Erkennen von Fahrbahnoberflächenschäden mithilfe eines Bilderkennungsalgorithmus;
als Reaktion auf das Erkennen eines Fahrbahnoberflächenschadens im Fahrbahnoberflächenbild, Identifizieren des erkannten Fahrbahnoberflächenschadens im Fahrbahnoberflächenbild mit einem Begrenzungsrahmen;
Umwandeln der Pixelpositionen des Begrenzungsrahmens der erkannten Fahrbahnoberflächenschäden unter Verwendung eines Umrechnungsalgorithmus vom Koordinatensystem des Sensors in Pixelpositionen im Koordinatensystem des eigenen Fahrzeugs;
Ermittlung eines Schweregrades der erkannten Fahrbahnoberflächenschäden, wobei die Ermittlung des Schweregrades der erkannten Fahrbahnoberflächenschäden ferner Folgendes umfasst: Klassifizieren der erkannten Fahrbahnoberflächenschäden und Bestimmen eines Kategorie-Konfidenzniveaus sowie Bestimmen des Schweregrades auf der Grundlage der ermittelten Kategorie und des Kategorie-Konfidenzniveaus;
Bestimmen einer Schadensentfernung des Fahrbahnoberflächenschadens vom Fahrzeug ausgehend auf der Grundlage der Pixelpositionen des Begrenzungsrahmens des Fahrbahnoberflächenschadens im Koordinatensystem des Eigenfahrzeugs; und
Anpassen einer Strategie für das autonome Fahren des Fahrzeugs basierend auf dem Schadensausmaß und der Schadensentfernung.

2. Verfahren zur Steuerung des autonomen Fahrens nach Anspruch 1, wobei die Kategorie der Fahrbahnoberflächenschäden Folgendes umfasst: einen Querriss, einen Längsriss, ein Schlagloch, eine Abplatzung, eine Senkung und einen Bruch.

3. Verfahren zur Steuerung des autonomen Fahrens nach Anspruch 2, wobei:
falls es sich bei der Kategorie des Fahrbahnoberflächenschadens um einen Querriss oder einen Längsriss handelt und das Konfidenzniveau der Kategorie einen ersten Schwellenwert überschreitet, wird der Schweregrad des Fahrbahnoberflächenschadens mit Stufe 0 bewertet;
falls es sich bei der Kategorie des Fahrbahnoberflächenschadens um ein Schlagloch handelt und das Konfidenzniveau der Kategorie einen zweiten Schwellenwert überschreitet, liegt der Schweregrad des Fahrbahnoberflächenschadens bei Stufe 1; oder
falls es sich bei der Kategorie des Fahrbahnoberflächenschadens um eine Rissbildung, eine Senkung oder einen Bruch handelt und das Konfidenzniveau der Kategorie größer als ein dritter Schwellenwert ist, liegt der Schweregrad des Fahrbahnoberflächenschadens bei Stufe 2.

4. Verfahren zur Steuerung des autonomen Fahrens nach Anspruch 1, wobei der erste Schwellenwert 60 bis 90 % beträgt, der zweite Schwellenwert 60 bis 90 % beträgt und der dritte Schwellenwert 60 bis 90 % beträgt.

5. Verfahren zur Steuerung des autonomen Fahrens nach Anspruch 1, wobei das Anpassen der Strategie für das autonome Fahren ferner mindestens eine der folgenden Maßnahmen umfasst: Ausweichen, Abbremsen und Anhalten.

6. System für das autonome Fahren eines Fahrzeugs, das Folgendes umfasst:
einen Sensor, der für die Aufnahme eines Fahrbahnoberflächenbildes ausgebildet ist;
eine Fahrbahnoberflächenschaden-Erkennungseinheit, die für Folgendes ausgebildet ist:
Erkennen von Fahrbahnoberflächenschäden anhand eines vom Sensor aufgenommenen Fahrbahnoberflächenbildes mithilfe eines Bilderkennungsalgorithmus;
als Reaktion auf das Erkennen eines Fahrbahnoberflächenschadens im Fahrbahnoberflächenbild, Identifizieren des erkannten Fahrbahnoberflächenschadens im Fahrbahnoberflächenbild mit einem Begrenzungsrahmen;
Umwandeln, mithilfe eines Umrechnungsalgorithmus, der Pixelpositionen des Begrenzungsrahmens der erkannten Fahrbahnoberflächenschäden aus dem Koordinatensystem des Sensors in Pixelpositionen im Koordinatensystem des eigenen Fahrzeugs;
Bestimmen des Schweregrades der erkannten Fahrbahnoberflächenschäden durch Klassifizieren der erkannten Fahrbahnoberflächenschäden und Festlegen eines Konfidenzniveaus für die jeweilige Kategorie sowie durch Bestimmen des Schweregrades auf der Grundlage der festgelegten Kategorie und des Konfidenzniveaus; und
Bestimmen der Entfernung des Fahrbahnoberflächenschadens vom Fahrzeug basierend auf den Pixelpositionen des Begrenzungsrahmens des Fahrbahnoberflächenschadens im Koordinatensystem des Eigenfahrzeugs; und
eine Einheit für autonomes Fahren, die dafür ausgebildet ist, die Strategie für das autonome Fahren des Fahrzeugs auf der Grundlage des Schadensausmaßes und der Schadensentfernung einzustellen.

7. Steuerungssystem für autonomes Fahren nach Anspruch 6, wobei der Sensor ferner so ausgebildet ist, dass er das erfasste Fahrbahnoberflächenbild virtuell korrigiert, um Unebenheiten oder Änderungen des Straßengefälles auszugleichen.

8. Fahrzeug, das ein Steuerungssystem für autonomes Fahren gemäß einem der Ansprüche 6 bis 7 umfasst.

9. Fahrzeug nach Anspruch 8, wobei die Einheit für autonomes Fahren ferner so ausgebildet ist, dass sie die Strategie für autonomes Fahren für das Fahrzeug auf der Grundlage eines Typs, einer Einstellung des Benutzers und/oder einer aktuellen Geschwindigkeit des Fahrzeugs einstellt.

10. Fahrzeug nach Anspruch 8, wobei das System für autonomes Fahren ferner so ausgebildet ist, dass es als Reaktion auf die Erkennung eines Fahrbahnoberflächenschadens eine Warnung bezüglich dieses Schadens an einen Benutzer des Fahrzeugs ausgibt.

## Revendications

1. Procédé de commande de conduite autonome pour un véhicule, comprenant :
l'obtention d'une image de surface de route en provenance d'un capteur du véhicule ;
la détection de dégât de surface de route à partir de l'image de surface de route en utilisant un algorithme de détection d'image ;
en réponse à la détection du dégât de surface de route dans l'image de surface de route, l'identification du dégât détecté de surface de route avec un rectangle de délimitation dans l'image de surface de route ;
la conversion, en utilisant un algorithme de conversion, de positions de pixel du rectangle de délimitation du dégât détecté de surface de route sous un système de coordonnées du capteur en positions de pixel sous un système de coordonnées d'égo-véhicule ;
la détermination d'un degré de dégât du dégât détecté de surface de route, dans lequel la détermination du degré de dégât du dégât détecté de surface de route comprend en outre :
la classification du dégât détecté de surface de route et la détermination d'un niveau de confiance de catégorie, et la détermination du degré de dégât sur la base de la catégorie déterminée et du niveau de confiance de catégorie ;
la détermination d'une distance de dégât du dégât de surface de route par rapport au véhicule sur la base des positions de pixel du rectangle de délimitation du dégât de surface de route sous le système de coordonnées d'égo-véhicule ; et
l'ajustement d'une stratégie de conduite autonome pour le véhicule sur la base du degré de dégât et de la distance de dégât.

2. Procédé de commande de conduite autonome de la revendication 1, dans lequel la catégorie du dégât de surface de route comprend : une fissure latérale, une fissure longitudinale, un nid-de-poule, une crevasse, un tassement, et une fracture.

3. Procédé de commande de conduite autonome de la revendication 2, dans lequel :
au cas où la catégorie du dégât de surface de route serait une fissure latérale ou une fissure longitudinale et le niveau de confiance de catégorie serait supérieur à un premier seuil, le degré de surface de route du dégât de surface de route est un niveau 0 ;
au cas où la catégorie du dégât de surface de route serait un nid-de-poule et le niveau de confiance de catégorie serait supérieur à un deuxième seuil, le degré de surface de route du dégât de surface de route est un niveau 1 ; ou
au cas où la catégorie du dégât de surface de route serait une crevasse, un tassement, ou une fracture et le niveau de confiance de catégorie serait supérieur à une valeur de troisième seuil, le degré de surface de route du dégât de surface de route est un niveau 2.

4. Procédé de commande de conduite autonome de la revendication 1, dans lequel le premier seuil est de 60 à 90 %, le deuxième seuil est de 60 à 90 %, et le troisième seuil est de 60 à 90 %.

5. Procédé de commande de conduite autonome de la revendication 1, dans lequel l'ajustement la stratégie de conduite autonome comprend en outre au moins un élément parmi un évitement, un ralentissement, et un arrêt.

6. Système de commande de conduite autonome pour un véhicule, comprenant :
un capteur configuré pour capturer une image de surface de route ;
une unité de détection de dégât de surface de route configurée pour :
détecter un dégât de surface de route à partir de l'image de surface de route capturée par le capteur en utilisant un algorithme de détection d'image ;
en réponse à la détection du dégât de surface de route dans l'image de surface de route, identifier le dégât détecté de surface de route avec un rectangle de délimitation dans l'image de surface de route ;
convertir, en utilisant un algorithme de conversion, des positions de pixel du rectangle de délimitation du dégât détecté de surface de route sous un système de coordonnées du capteur en positions de pixel sous un système de coordonnées d'égo-véhicule ;
déterminer un degré de dégât du dégât détecté de surface de route en classifiant le dégât détecté de surface de route et déterminant un niveau de confiance de catégorie, et déterminant le degré de dégât sur la base de la catégorie déterminée et du niveau de confiance de catégorie ; et
déterminer une distance de dégât du dégât de surface de route par rapport au véhicule sur la base des positions de pixel du rectangle de délimitation du dégât de surface de route sous le système de coordonnées d'égo-véhicule ; et
une unité de conduite autonome configurée pour ajuster une stratégie de conduite autonome pour le véhicule sur la base du degré de dégât et de la distance de dégât.

7. Système de commande de conduite autonome de la revendication 6, dans lequel le capteur est en outre configuré pour corriger l'image de surface de route capturée en virtuel pour compenser des bosses ou des changements de gradient de route.

8. Véhicule, comprenant un système de commande de conduite autonome de l'une quelconque des revendications 6 et 7.

9. Véhicule de la revendication 8, dans lequel l'unité de conduite autonome est en outre configurée pour ajuster la stratégie de conduite autonome pour le véhicule sur la base d'un type, d'un réglage utilisateur, et/ou d'une vitesse actuelle du véhicule.

10. Véhicule de la revendication 8, dans lequel la conduite autonome est en outre configurée pour émettre une alerte pour le dégât de surface de route à un utilisateur du véhicule en réponse à la détection du dégât de surface de route.
